(19) Europäisches Patentamt
European Patent Office
Office européen des brevets

(11) **EP 1 835 773 A1**

(12) **EUROPEAN PATENT APPLICATION**

(43) Date of publication:
**19.09.2007 Bulletin 2007/38**

(51) Int Cl.:
***H04Q 7/38*** *(2006.01)*

(21) Application number: **06005096.0**

(22) Date of filing: **13.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **NOKIA SIEMENS NETWORKS GMBH & CO. KG**
**81541 München (DE)**

(72) Inventors:
• **Andersen, Frank-Uwe**
**10625 Berlin (DE)**

• **Caviglione, Luca**
**CAP 16142 Genova (IT)**
• **Davoli, Franco**
**CAP 16154 Genova (IT)**
• **Hoßfeld, Tobias**
**97074 Würzburg (DE)**
• **Oechsner, Simon**
**97218 Gerbrunn (DE)**
• **Trangia, Phuoc, Prof. Dr.**
**97076 Würzburg (DE)**
• **Tutschku, Kurt, Dr.**
**97218 Gerbrunn (DE)**

(54) **Method and node for providing handover information to a requestor in a communications system**

(57) Method and node for providing information to at least one mobile station in a communications network, comprising the steps of:
- receiving at a first node of a plurality of nodes a request for said information transmitted from said at least one mobile station, said plurality of nodes belonging to a number of access technologies;
- routing using a routing table said request by said first node to a second node, said second node being located closest to a position where said at least one mobile station transmitted said request;
- retrieving from a storage location by said second node of a at least one data entry;
- generating by said second node using said at least one data entry said information, and
- transmitting by said second node said information to said at least one mobile station.

FIG 2

**Description**

**Field of the invention**

The invention is used in communications systems to ensure that requested information is provided in a fast and efficient manner to a requestor.

**Summary of the invention**

Communications systems today, comprise of different networking and access technologies. These technologies are not fully integrated nor are they optimised to take into account other existing technologies. In the event of a UE (user equipment) wishing to change from one access technology to another, commonly known as a VHO (vertical handoff or vertical handover), time consuming actions such as signalling a central controller or scanning a radio spectrum, have to be performed before the actual change can be made. The same is also applicable when a UE wishes to perform an HHO (horizontal handoff) within the same access technology.

In order to overcome this incompatibility between access technologies, a solution has been implemented taking into account such communications systems as wireless or mobile systems and their evolution beyond the current technologies in use, which are based on standards supporting GSM (Global System for Mobile Communications), UMTS (Universal Mobile Telephone System), or WLAN (Wireless Local Access Network).

The solution envisages that future communications systems will comprise of a multitude of access technologies used to connect UEs, (referred henceforth also as MSs (mobile stations or MTs (mobile terminals)) to core networks such as the PSTN (Public Switched Telephone Network) or to the Internet.

According to this solution, measurement reports (referred henceforth also as measurement information) are gathered by numerous UEs. These reports are then transmitted to an entity in the system, stored there, and upon a request from a UE, analysed, and the information extracted enabling a UE to change access technology or not is then transmitted back to the requesting UE.

The WINNER (Wireless World Initiative New Radio) project (https://www.ist-winner.org/), proposes that the entity receiving and storing the measurement reports further comprises of a decision mechanism that upon receiving a request from a UE, retrieves the necessary measurement reports, analyses them, generates a message and transmits it back to the UE. This message comprises of information indicating to the UE the appropriate moment for changing access technology.

However, this solution has the drawback that the entity that uses the decision mechanism, for example a network management entity such as a NMS (network management system) or a dedicated computer or server, is centrally located within the communications system.

All measurement reports have to be transmitted to the entity from all UEs within the communications system; this leads to an increase in the signalling overhead reducing the capacity of the system to transmit data that does not include these measurement reports. The efficiency of the whole communications system is thus reduced.

Furthermore, it is a necessary requirement for the entity to have adequate storage resources, for example a database, capable to maintain all the different measurement reports received and adequate processing capacities to retrieve and analyse the stored information. As the number of UEs increases within a communications system, so will the number of measurement reports increase, requiring a large investment in hardware storage facilities for storing the measurement reports, as well as processing power in order to be able to generate information for a number of UEs requesting it.

Additionally, as the numerous measurement reports and the transmitted messages have to travel through the communications system, the time required to gather all of them and transmit back a message on request, greatly reduces the possibility of a fast and seamless change of access technology for a UE. The fact also, that a large number of hops required to reach a destination is large, further reduces system efficiency.

Furthermore, the entity, being centrally located, constitutes a SPF (Single Point of Failure) and so redundancy is required in order to ensure that in case of a failure the mechanism will still function. This redundancy also increases the amount of hardware investment required. Moreover, as there will exist at least two such entities, one being active and the other one in standby mode, synchronisation of the stored measurement reports must be performed regularly, further increasing signalling, processing requirements and time delays.

Moreover, this solution is not adaptable to an increase of UEs, therefore in order to compensate for an eventual increase in the number of UEs present, over-dimensioning is necessary, resulting in a waste of resources and increasing the amount of cash investment needed.

Furthermore, each access point, to which a UE is in communication, needs to be aware of neighbouring access points in order to be able to perform a handover request quickly and efficiently. For this, it is necessary for an access point to acquire the appropriate routing information, in order to provide routing directions to a destination point, for messages/requests that need to be transmitted within the communications system.

Currently, when designing a communications system, access points are assigned unique identifiers, allowing them to recognise neighbouring access points. The drawback with this solution is that it is highly structured and hierarchical and it is not flexible enough to adapt as more and more access technologies are implemented into communications systems, each access technology having its own access points. Additionally, it is also harder to assign unique identifiers that provide clear neighbouring indications when a multitude of different access points using different access technologies are present.

A solution to the above issue has been to let each access point generate its own unique identifier. This unique identifier can be either a random 160-bit identifier or a 160-bit identifier resulting from the combination of its assigned IP (internet protocol) address with a hash function such as SHA-1 (secure hash algorithm-1), defined in the "Secure Hash Standard, FIPS PUB 180-1, 17-04-1995". Each access point then transmits, for example via a broadcast message, its unique identifier. Access points on receiving such transmissions; compare the unique identifier with their own generated identifier. Through the comparison, identifiers that have an arithmetic value close to the identifier of the access point making the comparison, either a higher or a lower one, are deemed to be neighbouring access points. In this way a routing table is completed.

The drawback with this solution is that the routing table built does not reflect the number of hops between access points. An access point appearing to be a neighbouring one can be more than one hop away. Thus, a reduction in the time required for message to be transmitted is not achieved.

A need therefore exists for a technique that can provide requested information in a simple, fast and efficient way, so that a change of access technology can be executed seamlessly without any reduction in the efficiency of the communications system nor increasing the amount of signalling traffic, as well as overcoming the drawback of having a SPF in the communications system. Additionally, this technique also needs to provide for an efficient and guaranteed way in which routing tables can be created ensuring that handover messages need only travel a minimum distance through the communications system.

With the present invention, the above mentioned issues are resolved. The proposed technique allows for a distributed storage method of information such as measurement reports or of other data, in nodes spread throughout the communications system. In this way there is no single SPF present in the communications system, the efficiency is not reduced, signalling within the communications system is kept within acceptable limits as signalling traffic is not propagated throughout the communications system. A request for information is routed quickly to its destination, thus ensuring that a reply is generated quickly and a UE can then take a decision.

A further advantage is that the proposed technique can be implemented on all nodes that act as receivers or transmitters in such communications systems. Another advantage is that UEs, such as mobile stations do not need to regularly perform time consuming actions such as scanning a radio spectrum on their wireless interface, in order to determine whether a change in access technology is necessary, as a request for information from the node will entail a message in reply with that required information. Still another advantage is that, as the storage of the information is distributed throughout the network, only a part of that information can be accessed at any one time from a particular location of a requestor, this increases the level of protection of the stored information.

The technique is achieved by the teachings contained in the independent method and node claims.

Said method provides, information to at least one mobile station in a communications network, comprising the steps of:

- receiving at a first node of a plurality of nodes a request for said information transmitted from said at least one mobile station, said plurality of nodes belonging to a number of access technologies;
- routing using a routing table said request by said first node to a second node, said second node being located closest to a position where said at least one mobile station transmitted said request;
- retrieving from a storage location by said second node of a at least one data entry;
- generating by said second node using said at least one data entry said information, and
- transmitting by said second node said information to said at least one mobile station.

Said node comprises means arranged to perform the method of claim 1.

Further advantages can be seen in the dependent claims, wherein:

Preferably, the information relates to information used in a handover procedure, thus allowing a handover to be performed in a more efficient manner, as relevant information to this procedure is contained in it.

Preferably, the routing table comprises of at least one entry relating to the second node, thus allowing the routing to be performed quickly and efficiently, as well as comprising at least a further entry relating to an access technology reference and a position reference of the second node, thus allowing for efficient routing to the second node.

Preferably, the at least one data entry comprises of data relating to at least one measurement which relates to at least one quality measurement taken and a position reference indicating the position where the measurement was taken, thus allowing storage of data to be made in an efficient manner as well as allowing for the data to be retrieved easily.

**Short description of the drawings**

The present invention will become more apparent from the description given herein below and from the accompanying drawings which are given by way of illustration only, and thus are not limitative of the present invention, and wherein:

Fig. 1 depicts a communications system wherein the prior art solution is implemented.

Fig. 2 depicts a communications system wherein the inventive technique is implemented.

Fig. 3 depicts an example of the way that the inventive technique functions.

Fig. 4 shows in block diagram form the arrangement of means required for an access node to execute the inventive technique.

Fig. 5 shows the mechanism for storing a received measurement report in a communications system.

**Detailed description of the invention**

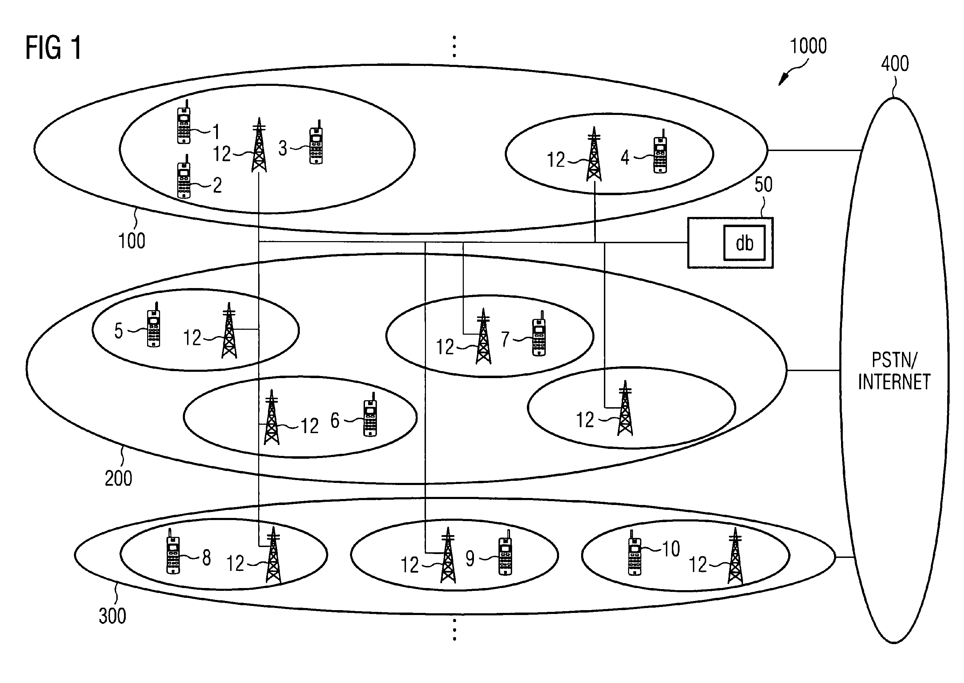

Figure 1 depicts a communications system 1000 implementing the current state of the art solution for changing the access technology. The communications system 1000 comprises of a plurality of systems 100, 200, 300. For reasons of ease of understanding only three such systems 100, 200, 300 are depicted.
Each one of these systems 100, 200, 300 comprises of a particular access technology used within each system respectively. For example system 100 uses GSM access technologies, system 200 UMTS access technologies, system 300 WLAN access technologies.
Each system 100, 200, 300 is in turn coupled to a further system 400, which is a PSTN (public switched telephone network) and/or the internet. Systems 100, 200, 300 comprise of the required devices and or mechanisms arranged for effectuating a connection with system 400. However, it is apparent to anyone skilled in the art that communications system 1000 can comprise of more systems. In order to permit a change of access technology, at least two systems are required.
Each one of systems 100, 200, 300 spans the complete communications system 1000 and/or parts of it, depending on the design of each individual system 100, 200, 300.
Within the communications system 1000 a plurality of mobile stations exist and are distributed within system 100, 200, 300. These stations are depicted with numerals 1, 2, 3, 4, 5, 6, 7, 8, 9 and 10. Naturally, a person skilled in the art would know that more or less than the depicted mobile stations can exist.
Each system 100, 200, 300 is respectively further subdivided into smaller coverage areas. These coverage areas are also known in the art as cells. Each coverage area is under the control of an access point (referred henceforth also as access node) 12. Preferably, these access nodes 12, depending on the type of access technology used can be a BSC (base station controller) when a GSM access technology is used, a RNC (radio network controller) when a UMTS access technology is used or a WLAN AN (wireless local area network access node) when the access technology used is that of a wireless LAN. Each access node 12 further comprises of the required means necessary for the connection of the coverage area which it controls and by extension of the systems 100, 200, 300 to system 400.
These means are not depicted in fig.1 for reasons of simplicity, but for example they can comprise of MSCs (Mobile Switching Centres) responsible for the switching functions necessary for interconnections between a system using GSM technology and system 400, or other equivalent means used in other access technologies.
When a mobile station 2 wishes to perform a handover within its own system 100 and therefore to change its point of attachment, it will request, via a transmitted request message, for information pertaining to a handover. This request message is transmitted to an entity 50 which is centrally located within communications system 1000, over communications network 1000. Entity 50 comprises of a decision mechanism and a storage means such as a data base where information pertaining to numerous types of request, one of which being a request for a handover, are stored.
The entity 50 can be for example a central NMS or a network management computer or server used to control and manage the communications network 1000. Upon receiving the request the entity 50 and in particular the decision mechanism will retrieve, using retrieving means, the information stored in the storage means, analyse the information, generate a reply and transmit the reply back to mobile station 2. The reply comprises of the necessary information needed by mobile station 2, to decide whether a request for the handover is to be performed or not.

Upon reception of the reply, mobile station 2 can then determine whether or not a handover to another access point is possible and whether it is worthwhile performing the handover. This change of attachment point is also known as a HHO (horizontal handover).

Furthermore, it is sometimes also required for a mobile station 2 to move from one system 100 using one access technology to another system 200 using a different access technology.

This can be due to the operator wishing to perform load balancing between the two systems, in order to achieve better efficiency and better quality of service or due to the fact that mobile station 2 wishes to receive a service or subscribe to a service which is not available in one access technology but is in the other, or simply because one access technology provides a better connection and a better or higher data rate than the existing one.

As in the previous scenario, a request is transmitted from mobile station 2 to entity 50 over communications network 1000 and in turn entity 50 will provide a reply. Mobile station 2 can then request the change of access technology or not, depending on the information provided. A change of access point during a handover entailing a change of access technology is known as a VHO (vertical handover).

As indicated above, in both cases of handover, all the signalling carrying the request and the reply has to travel throughout the communications system 1000. This causes an increase in the amount of signalling that is transmitted over the network in real time.

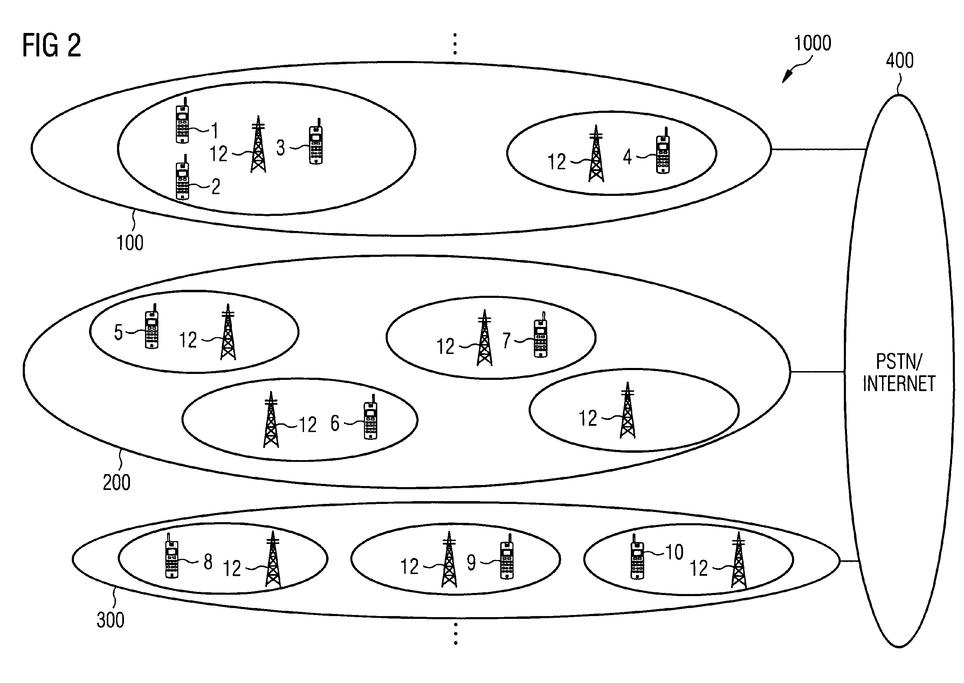

Figure 2, depicts a communications system 1000 implementing the inventive mechanism. Communications system 1000 comprises of a plurality of systems 100, 200, 300. For reasons of ease of understanding only three such systems 100, 200, 300 are depicted. Each one of these systems 100, 200, 300 comprises of a particular access technology used within each system respectively. For example system 100 uses GSM access technologies, system 200 UMTS access technologies, system 300 WLAN access technologies.

Each system 100, 200, 300 is in turn coupled to a further system 400, which is a PSTN (public switched telephone network) and/or the internet. Systems 100, 200, 300 comprise of the required devices and or mechanisms arranged for effectuating a connection with system 400. However, it is apparent to anyone skilled in the art that communications system 1000 can comprise of more systems. In order to permit a change of access technology, at least two systems are required.

Each one of systems 100, 200, 300 spans the complete communications system 1000 and/or parts of it, depending on the design of each individual system 100, 200, 300.

Within the communications system 1000 a plurality of mobile stations exist and are distributed within system 100, 200, 300. These mobile stations are depicted with numerals 1, 2, 3, 4, 5, 6, 7, 8, 9 and 10. Naturally, a person skilled in the art would know that more or less than the depicted mobile stations can exist.

Each system 100, 200, 300 is respectively further subdivided into smaller coverage areas. These coverage areas are also known in the art as cells. Each coverage area is under the control of an access node 12. Preferably, these access nodes 12, depending on the type of access technology used can be a BSC (base station controller) when a GSM access technology is used, a RNC (radio network controller) when a UMTS access technology is used or a WLAN AN (wireless local area network access node) when the access technology used is that of a wireless LAN. Each access node 12 further comprises of the required means necessary for the connection of the coverage area which it controls and by extension of the systems 100, 200, 300 to system 400. These means are not depicted in fig.2 for reasons of simplicity, but for example they can comprise of MSCs (Mobile Switching Centres) responsible for the switching functions necessary for interconnections between a system using GSM technology and system 400, or other equivalent means used in other access technologies.

A mobile station 2, wishing to perform a handover within its own system 100 and therefore to change its point of attachment, requests, via a transmitted request message, to the access node 12 to which it is in communication for information pertaining to a handover. This access node is also known in the art as a serving access node 12. The request message comprises of a position reference, preferably a 2-coordinate or a 3-coordinate position reference, of the mobile station 2 indicating the position of the mobile station 2 when transmitting the request message and an indicator regarding the access technology used by mobile station 2. Access node 12, upon receiving the request message will compare the position reference of mobile station 2, with position references of neighbouring access nodes 12 which are located in a routing table of access node 12. Upon determining a neighbouring access node 12 that is located closest to the position of the mobile station, the message is forwarded to the appropriate access node 12, which will then reply to mobile station 2.

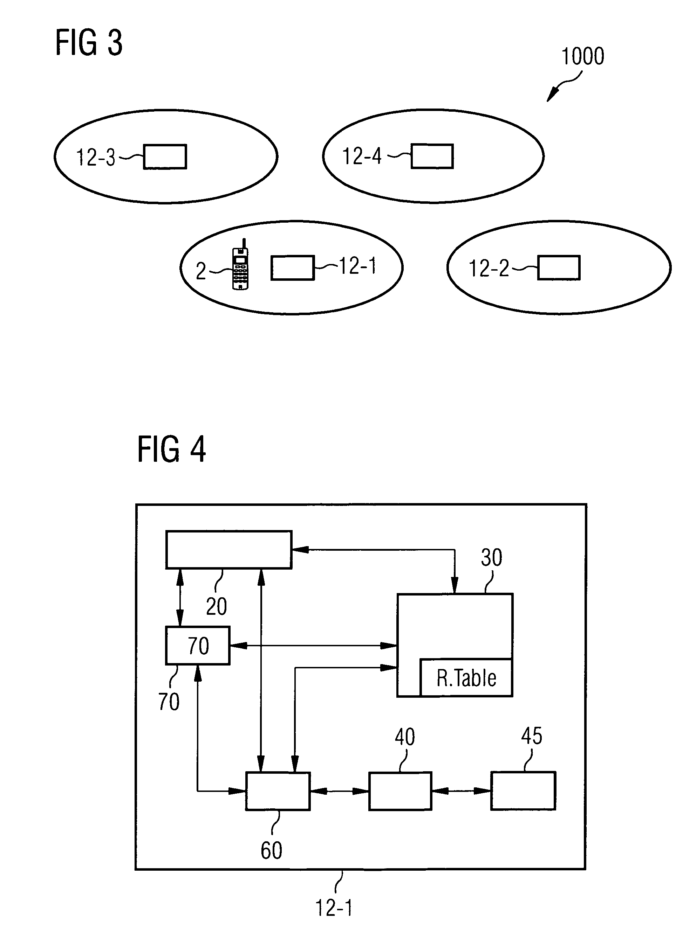

Fig. 3 depicts a more detailed example of how the inventive technique works. In this example it is assumed that nodes belonging to different access technologies are present. In particular, access node 12-1 belongs to system 100 and access node 12-2 belongs to system 200. Further access nodes 12-3 and 12-4 are also depicted as is a mobile station 2. All access nodes and mobile station belong to communications system 1000. Each access node 12-1, 12-2, 12-3, 12-4 comprise of the arrangement of means described in fig. 4.

Mobile station 2 is being served by access node 12-1 within the coverage area of this access node. Access node 12-1 is the serving access node for mobile station 2. Mobile station 2 at a particular point in time can either on its own initiative or from a received message from a NMS transmit a request for information in order to determine whether a vertical handover can be performed. Mobile station 2 therefore transmits a message to its serving access node 12-1. This message will contain an entry indicating a position reference of the mobile station at the time the request was transmitted. This position reference can be found by the mobile station using GPS, A-GPS or cell information, and it can be a 2-coordinate position reference in a format (x, y) or a 3-coordinate position reference in a format (x, y, z). Where x corresponds to a latitude reference of the position of the mobile station, y to a longitude reference of the position of the mobile station and z to the height of at which the mobile is.

The message will also contain data relating to the particular request necessary. Upon receiving this message the serving access node 12-1 verifies the position reference of the received message, in order to ascertain the position at which the mobile station transmitted the message. The access node 12-1 will then compare the position reference of mobile station 2 with its own position reference and with the position references of its neighbouring nodes. These position references of neighbouring access nodes are stored in the routing table of access node 12-1. It is assumed that the routing tables of access node 12-1 and of all other access nodes present in communications system 1000, comprise of entries of neighbouring access nodes that belong to all the different access technologies present in the communications system 1000 with their individual position references.

Upon ascertaining, based on the position references, which access node is the closest node to the position where the mobile station 2 generated its request, access node 12-1 will then route the request to the closest node.

The closest access node is ascertained by the following equation, when using 2-coordinate position:

$$d(A,B) = \left( \left| x_A - x_B \right|^2 + \left| y_A - y_B \right|^2 \right)^{1/2}$$

Where $d$ is the distance between an access node A having position reference $x_A, y_A$ and an access node B or a mobile station having position reference $x_B, y_B$.

In our illustrative example the closest access node to the position of mobile station 2 is access node 12-2. Access node 12-1 has entries in its routing table concerning access nodes 12-3 and 12-4, however, even though these access nodes are neighbouring access nodes of access node 12-1 they are not closest to the position reference of mobile station 2, therefore the message is not routed to them.

Access node 12-2 on receiving the request retrieves the appropriate measuring reports. It then generates the appropriate information, by for example compiling certain measuring reports and providing one piece of information or set of data that when transmitted directly back to mobile station 2 and not via the serving access node 12-1, allowing mobile station 2 to request a VHO or not.

Figure 4 shows in block diagram form the arrangement of means that comprise an access node, such as access nodes 12-1, 12-2 etc, located in communications system 1000. The means within access node are arranged to execute the method of the invention. The access node 12-1 comprises of transmit/receive means 20 which are adapted to receive and transmit messages to and from the access node 12-1. Furthermore, access node 12-1 comprises of routing means 30 which further comprise of a routing table. The routing table comprises of information necessary for an access node 12-1 to route a message received or to provide the correct destination of a message to be transmitted. The format of the routing table comprises of an entry indicating the access technology associated to a particular neighbouring access node and its position reference. The routing means 30 are also adapted to ascertain which nodes are neighbouring nodes as well as which node is the closest one to the mobile station, based on the position references of each access node and of the mobile station. The entry indicating the position of the closest nodes comprises of a 2-coordinate position reference in a format (x, y) or a 3-coordinate position reference in a format (x, y, z). Where x corresponds to a latitude reference of the position of the mobile station, y to a longitude reference of the position of the mobile station and z to the height of at which the mobile is.

Naturally, it is obvious to a person skilled in the art that further entries can be placed in the routing table in order to allow a node to route a message. Such a further entry can be an IP (internet protocol) address of an access node or another type of address.

Fig. 4 depicts the arrangement of means in a node, such as access node 12-1, adapted to execute the inventive technique and comprises of retrieving means 40 which are arranged to retrieve measurement reports or other data from a storage location 45. Preferably, the storage location is a data base. Storage can be ensured by means such as flash RAM (random access memory), CD-ROM (compact disc- read only memory), floppy disc or by a combination of them. The retrieval means 40 are coupled to generating means 60 which are also coupled to the routing means 30.

The generating means 60 having received the retrieved information from the retrieving means 40 analyse it and then generate a reply comprising of the required information necessary for a handover decision to be made.

Access node 12-1 then transmits via the receive/transmit means 20 the reply in a message back to the requester, i.e. mobile station 2. All means in access node 12-1 are under the control of control means 70.

To choose the most suitable radio access technology a fundamental aspect is to assess the quality that different radio access technologies provide to the different users using mobile stations. This quality verification is basically obtained from measurements on the current and target networks. These measurements are included in the transmitted measurements reports that are sent periodically or at specific instances by the mobile stations to the nodes. There are metrics coming from all the different systems 100, 200, 300 available and are used in generating and determining whether a handover is possible or not.

Such metrics are the cell load, the location of the mobile station, the velocity of the mobile station, the environment of a particular user using a particular mobile station, mobile station capabilities, previously generated and stored handover metrics for a particular access technology.

Measurement reports depending on the access technology used and/or served to a mobile station at a particular moment in time can also be the following:

A mobile station 2 in a GSM type access technology will perform the following measurements and generate corresponding measurement reports which are transmitted to the corresponding node 12 of the cell within which the mobile station is located. In this case the node 12 is a BSS and the measurement reports are stored in a BSC (base station controller).

These measurements are:

RXLEV (received signal level) of the serving cell,
RXQUAL (received signal quality) of the serving cell evaluated through the BER (bit error rate), and RXLEVNCELL (received signal strength of the neighbouring cells).

These measurements are reported on the SACCH (slow associated control channel) channel periodically every 480 milliseconds. The serving access node 12 can measure the performance of uplink channel for each mobile station being served by the cell and also the interference level on its idle traffic channels and report these measurements as well to the BSC. Moreover, mobile stations within a GSM access technology can also perform measurements to generate measurement reports on UMTS cells.

The information gathered about UMTS cells are:

CPICH RSCP (common pilot channel received signal code power), PCCPCH RSCP (primary common control channel received signal code power) for cells using TDD (time division duplexing) and CPICH $E_c/I_o$ (common pilot channel current serving cell quality indicator) for cells using FDD (frequency division duplexing). These measurements can also be used in the cell re-selection and handover procedures.

For access technologies using GPRS (General Packet Radio Service) access technologies, the same measurements are used except that the mobile station in packed mode can measure the interference signal level, on the same carrier as the assigned packet data channels in packet transfer mode and on the monitored packet common control channel in packet idle mode.

For access systems using UMTS access technologies, the measurements performed by the mobile stations and transmitted in measurement reports are sent to access node 12 of the cell within which the mobile station is located. In this case the access node 12 is a RNC. In this access technology the measurements can be reported periodically or are event triggered. The mobile station 2 can perform several measurements that can be divided into 8 categories.

All measurements are performed by the physical layer except for traffic measurements which are performed at the MAC layer.

Some of these measurements are:

Intra-frequency measurements such as CPICH $E_c/I_o$, CPICH RSCP and path loss.
Inter-frequency measurements such as CPICH $E_c/N_o$ (common pilot channel ratio of desired receive power per chip to receive power density in the band), CPICH RSCP.
Inter-radio access technology (inter-RAT) measurements such as GSM carrier RSSI (received signal strength indication). Mobile station internal measurements such as utra (UMTS Terrestrial Radio Access) carrier RRSI, mobile station transmitted power, mobile station receive to transmit time difference.
Quality measurements such as BER (bit error rate), BLER (transport channel block error rate).
Synchronisation measurements and/or traffic measurements such as total buffer occupancy of RLC (radio link control) buffer, average of buffer occupancy, variance of buffer occupancy.

For mobile stations functioning in a WLAN (wireless LAN) access technology using such protocols as the IEEE 802.11 and 802.11K the only measurement taken is the RSSI measurement. This measurement is useful to change the access point in case of mobility.

The different measurement types mentioned above, can be included directly into one measurement report or each measurement is included in an own measurement report and transmitted from mobile station 2 to its serving node 12.

These measurements types can be the received signal strand indication, the received channel power indicator indicating a measure of the absolute received power of an 802.11 signal, the channel lode, a noise histogram reporting containing the RPI identities in each of the eight power ranges defined by the measured RCPI in the specified channel over a specified measurement duration when CCA indicates idle the bigger report containing the RCPI that is the received channel power of the beacon of proved response frame in dBms, the frame report containing the RCPI, i.e. the received power of the received frame NDBM, the hidden node report containing the marked address of the station and the medium sensing time histogram reporting providing information describing many characteristics of the current radio activities present in the measured channel.

Other measurements that can be performed by mobile station 2 and transmitted in a measurement report for storage are certain indicators which are used generally to monitor the system performance. Such indicators are the drop core rate, the blocked call rate, the handover failure rate.

All measurement reports transmitted from a mobile station 2 comprise of at least one measurement from the above-mentioned measurements possible, the measurement report also comprises of an entry indicating the access technology used by the mobile station 2 at the time of making the measurement as well as a position reference entry indicating at which location the measurement(s) was/were taken. This positional reference is known by the mobile station 2 via GPS, A-GPS or cell information.

An access node 12-1 on receiving a measurement report will store in the appropriate storage location 45 an entry which comprises of three entries; a position reference, an access technology reference, and at least one measurement.

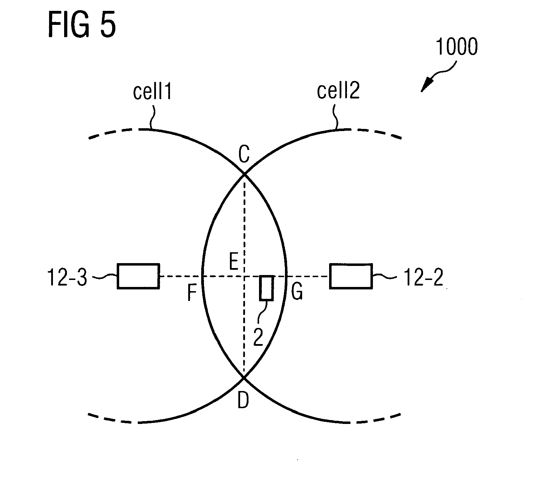

Fig. 5 illustrates the mechanism for storing a received measurement report in a communications system 1000. Two access nodes 12-1 and 12-2, each access node having an area of coverage or cell, are designated by the letters A and B respectively for reasons of simplicity. Each access node has a position reference given by a pair of co-ordinates; $(x_A, y_A)$ for access node A and $(x_B, y_B)$ for access node B. Both access nodes belong in the same system for example in system 100 and are neighbouring with each other. An overlap of the two cells is designated by a shaded area C-E-D-G-C. In this example, it is assumed that access node A is the serving access node to mobile station 2.

As mentioned previously, mobile station 2 transmits to serving access node A, a measurement report comprising entries of at least one measurement value, the type of measurement relating to the measurement value, the access technology used by the mobile station 2 when taking the measurement or measurements, the position reference of the mobile station 2 at the time of the measurement.

Upon receiving the measurement report, access node A compares the position reference included in the measurement report against stored position references of neighbouring access nodes belonging to the same system, i.e. neighbouring access nodes using the same access technology and its own position reference.

Upon determining, after the comparison, which access node is the closest one to mobile station 2, the serving access nodes forwards the measurement report to that closest access node. In practise the closest access node to the position reference of the mobile station is the serving access node of the mobile station. Therefore, the serving access node will forward the measurement report to its own storage means.

However, in the event that the mobile station 2 is located within the overlap area C-E-D-G-C, after comparing the different position references, the serving access node A can:

    a) store the measurement report by default as it is the serving node or,
    b) forward the measurement report to access node B, when mobile station 2 lies within segment C-F-D-G-C or,
    c) store by default and/or forward the measurement report to access node B, when mobile station 2 is located along chord C-F-D common to both cells 1 and 2 and is equidistant from both access nodes.

Using further parameters, such as the number of measurements already stored by the serving access node originating from the overlap area or number of mobile stations located within the overlap area or statistics of previous decisions, the serving access node can choose one of the above options and/or a combination of them.

Although the invention has been described in terms of a preferred embodiment described herein, those skilled in the art will appreciate other embodiments and modifications which can be made without departing from the scope of the teachings of the invention. All such modifications are intended to be included within the scope of the claims appended hereto.

**Claims**

1.  Method for providing information to at least one mobile station in a communications network, comprising the steps of:

    - receiving at a first node of a plurality of nodes a request for said information transmitted from said at least one mobile station, said plurality of nodes belonging to a number of access technologies;
    - routing using a routing table said request by said first node to a second node, said second node being located closest to a position where said at least one mobile station transmitted said request;
    - retrieving from a storage location by said second node of a at least one data entry;
    - generating by said second node using said at least one data entry said information, and
    - transmitting by said second node said information to said at least one mobile station.

2.  Method according to claim 1, wherein said information relates to information used in a handover procedure.

3.  Method according to claim 1, wherein said routing table comprises of at least one entry, said at least one entry relating to at least the second node.

4.  Method according to claims 1 or 3, wherein said routing table comprises of at least one further entry, said at least one further entry relating an access technology reference and a position reference of at least the second node.

5.  Method according to claim 1, wherein said at least one data entry comprises of data relating at least one measurement and a position reference indicating a position where said measurement was taken.

6.  Method according to claim 5, wherein said at least one measurement relates to at least one quality measurement performed by said at least one mobile station.

7.  Node comprising means arranged to perform the method of claims 1 to 6.

8.  Node according to claim 7, wherein said node is one of the following: a base station controller, a radio access controller, a wireless local area network access point.

9.  Communications system comprising at least one node according to claims 7 to 8.

10. Communications system according to claim 9, wherein said communications system is a wireless or mobile communications system.

FIG 1

EP 1 835 773 A1

FIG 2

EP 1 835 773 A1

## FIG 3

1000

12-3

12-4

2

12-1

12-2

## FIG 4

30

20

70

70

R.Table

40 45

60

12-1

# FIG 5

**European Patent Office**

**EUROPEAN SEARCH REPORT**

Application Number

EP 06 00 5096

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 524 814 A (MATSUSHITA ELECTRIC INDUSTRIAL CO., LTD) 20 April 2005 (2005-04-20) | 1-4,7-10 | INV. H04Q7/38 |
| A | * paragraphs [0002], [0110], [0125]; figures 10,14 * ----- | 5,6 | |
| A | US 6 654 362 B1 (PALAMARA MARIA E) 25 November 2003 (2003-11-25) * column 6, line 40 - column 9, line 14 * ----- | 1-10 | |
| A | WO 2004/047479 A (NOKIA CORPORATION) 3 June 2004 (2004-06-03) * page 7, paragraph 1-4; figure 7 * ----- | 1-10 | |

TECHNICAL FIELDS SEARCHED (IPC)

H04Q

The present search report has been drawn up for all claims

| Place of search | Date of completion of the search | Examiner |
|---|---|---|
| Munich | 4 May 2006 | Schneider, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 835 773 A1**

## ANNEX TO THE EUROPEAN SEARCH REPORT
## ON EUROPEAN PATENT APPLICATION NO.

EP 06 00 5096

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2006

| Patent document cited in search report | | Publication date | Patent family member(s) | | Publication date |
|---|---|---|---|---|---|
| EP 1524814 | A | 20-04-2005 | CN 1610439 A | | 27-04-2005 |
| | | | JP 2005143088 A | | 02-06-2005 |
| | | | US 2005083886 A1 | | 21-04-2005 |
| US 6654362 | B1 | 25-11-2003 | NONE | | |
| WO 2004047479 | A | 03-06-2004 | AU 2003283617 A1 | | 15-06-2004 |
| | | | EP 1561359 A2 | | 10-08-2005 |

EPO FORM P0459

For more details about this annex : see Official Journal of the European Patent Office, No. 12/82

15